Europäisches Patentamt

European Patent Office

Office européen des brevets

(19)

(11) Veröffentlichungsnummer: **0 255 916**
B1

# EUROPÄISCHE PATENTSCHRIFT

(12)

(45) Veröffentlichungstag der Patentschrift:
07.02.90

(21) Anmeldenummer: 87110973.2

(22) Anmeldetag: 29.07.87

(51) Int. Cl.⁴: **B60R 13/06**

(54) **Auf eine Blechkante einer Fahrzeugkarosserie aufzusetzendes Dichtungsprofil.**

(30) Priorität: 05.08.86 DE 3626457

(43) Veröffentlichungstag der Anmeldung:
17.02.88 Patentblatt 88/7

(45) Bekanntmachung des Hinweises auf die Patenterteilung:
07.02.90 Patentblatt 90/6

(84) Benannte Vertragsstaaten:
DE ES FR GB IT

(56) Entgegenhaltungen:
DE-A- 1 938 223
DE-A- 3 003 808
DE-A- 3 114 157
DE-A- 3 239 752
DE-U- 8 604 761
GB-A- 2 127 077
US-A- 3 755 873

(73) Patentinhaber: METZELER Gesellschaft mit
beschränkter Haftung, Gneisenaustrasse 15,
D-8000 München 50(DE)

(72) Erfinder: Kranz, Jürgen, Kirchstrasse 2,
D-8990 Lindau/Bodolz(DE)

(74) Vertreter: Michelis, Theodor, Dipl.-Ing.,
Gneisenaustrasse 15, D-8000 München 50(DE)

## Beschreibung

Die Erfindung bezieht sich auf ein auf eine Blechkante einer Fahrzeugkarosserie aufzusetzendes Dichtungsprofil mit einem im Querschnitt U-förmigen Grundkörper aus elastomerem Material, das mit einer darin eingebetteten, die Seitenflanken an die Blechkante anzudrückenden und im Querschnitt U-förmigen metallischen Verstärkungseinlage versehen ist, und deren Seitenflanken mit das Festhalten an der Bleckkante fördernden, in Längsrichtung angeordneten Dichtlippen aus gleichem elastomerem Material wie der Grundkörper versehen sind, wobei mindestens eine Dichtlippe auf einer Seitenflanke schräg nach innen einwärts gerichtet und mit einer Ecke am Grundkörper angelenkt ist, und eine, von der Ecke abgewandte verbreiterte Kopffläche aufweist, die als Anlagefläche mit der eingesetzten Blechkante in Berührung kommt.

Ein derartiges Dichtungsprofil ist aus der DE-A 3 239 752 bekannt. Dabei ist die Dichtlippe auf einer Seite des Grundkörpers in Form eines schwenkbar angelenkten Kopfteils angeordnet, dessen Anlagefläche konvex oder spiralförmig ausgebildet ist. Um hierbei einen festen Sitz zu erhalten, ist der Kopfteil durch eine eingearbeitete Montageschnur in einen oberen und einen unteren Abschnitt unterteilt, die über eine Sollbruchstelle verbunden sind, die nach Aufsetzen der Profilleiste auf die Blechkante mit Hilfe der Montageschnur aufreißbar ist. Das bedeutet, daß der feste Sitz erst dadurch erreicht wird, daß die Montageschnur nach unten gezogen wird und damit das Kopfteil gegen die abzudichtende Blechkante preßt. Dies bedingt jedoch einen erheblichen konstruktiven Aufwand und erhebliche Schwierigkeiten bei der Herstellung, die insbesondere bei einer üblichen Gesamtspaltbreite des Grundkörpers in einer Größenordnung von 6 mm nur schwer beherrschbar sein dürfte.

Der Erfindung liegt daher die Aufgae zugrunde, ein Dichtungsprofil zu schaffen, das einmal sehr leicht auf die abzudichtende Bleckkante aufgeschoben werden kann, das dann aber dort sehr fest sitzt und nur unter Aufwendung erheblicher Kräfte von der Bleckkante wieder abgezogen werden kann.

Zur Lösung dieser Aufgabe ist ausgehend von dem eingangs genannten Stand der Technik erfindungsgemäß vorgesehen, daß die mindestens eine Dichtlippe mit dreieckigem Querschnitt ausgebildet ist, wobei die Kopffläche eine konkav gewölbte Einziehung aufweist.

Bei einer derartigen Ausbildung der Dichtlippe ist ein Aufsetzen auf eine Blechkante sehr leicht möglich, da dann die Dichtlippe wegen des sehr schmalen Verbindungssteges zum Grundkörper leicht nach innen klappt, beim Herausziehen sich aber selbsttätig und sehr leicht gegen das Blechprofil verkeilt, so daß damit einem Herausziehen ein erheblicher Widerstand entgegengesetzt wird.

Zweckmäßigerweise verläuft die verbreiterte Kopffläche der dreieckförmigen Dichtlippe im unbelasteten Zustand schräg im Winkel zur Mittelebene des U-förmigen Grundkörpers.

Dabei können auf der einen Innenseite des U-förmigen Grundkörpers zwei wulstförmige Dichtlippen und auf der anderen Innenseite eine dreieckförmige Dichtlippe angeordnet sein. Es ist aber auch möglich, daß auf jeder der Innenseiten des U-förmigen Grundkörpers mehrere Dichtlippen parallel zueinander verlaufen.

Zur zusätzlichen Abdichtung kann einer der U-förmigen Schenkel zu einer abragenden flexiblen Dichtleiste verlängert sein.

Anhand einer schematischen Zeichnung sind Aufbau und Wirkungsweise von Ausführungsbeispielen nach der Erfindung näher erläutert. Dabei zeigen

Fig. 1 einen Querschnitt durch ein Dichtungsprofil mit einer dreieckförmigen Dichtlippe und

Fig. 2 einen Querschnitt durch ein Dichtungsprofil mit mehreren Dichtlippen.

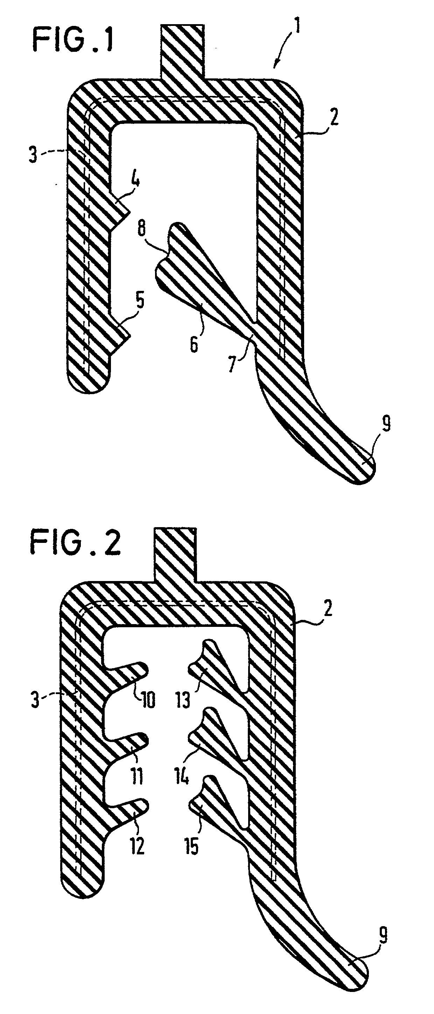

Wie man aus Fig. 1 ersieht, weist das Dichtungsprofil 1 einen U-förmigen Grundkörper 2 mit einer metallischen Verstärkungseinlage 3 auf. Auf der Innenseite dieses Grundkörpers 2 sind an der einen Innenfläche zwei kleine wulstförmige Dichtlippen 4 und 5 vorgesehen, während an der anderen Innenfläche eine angenähert dreieckförmige größere Dichtlippe 6 über einen schmalen Verbindungssteg 7 angelenkt ist. Diese Dichtlippe 6 ist an ihrem verbreiterten Kopfbereich mit einer konkav gewölbten Einziehung 8 versehen. Insgesamt verläuft diese Kopffläche im unbelasteten Zustand schräg im Winkel zu einer gedachten Mittelebene des U-förmigen Grundkörpers 2.

Beim Aufschieben dieses Dichtungsprofils 1 auf eine nicht näher dargestellte Blechkante setzt die Dichtlippe 6 diesem nur einen geringen Widerstand entgegen, da einmal nur eine geringe Berührungsfläche und damit Reibungsfläche zwischen einzuschiebendem Blech und Dichtlippe 6 besteht und zum anderen die Dichtlippe 6 nach innen klappt. Beim Abziehen des Dichtungsprofils 1 verkeilt sich jedoch die Dichtlippe 6 mit dem Blechbord und setzt damit dem Abziehen einen erheblichen Widerstand entgegen. Da die Dichtlippe einstückig und damit aus dem gleichen Material wie der Grundkörper 2 gefertigt ist, ist diese auch somit relativ steif und kann sich nicht aufrollen, sondern wirkt wie ein echter Keil, so daß ein Abziehen nur mit erheblichem Aufwand möglich ist. Durch die Gestaltung der Dichtlippe 6 und ihrer Anordnung im Grundkörper 2 wird die gleiche Verkeilwirkung auch bei Blechen unterschiedlicher Dicke erreicht, so daß ein derartiges Profil sehr universell eingesetzt werden kann.

Nach dem in Fig. 2 dargestellten Ausführungsbeispiel weist der Grundkörper 2 auf seiner einen Innenseite drei herkömmliche, spitz zulaufende Dichtlippen 10, 11 und 12 und auf der anderen Innenfläche drei dreieckförmige Dichtlippen 13, 14 und 15 auf. Mit einer derartigen Ausbildung ist einmal ein noch festerer Sitz und zum anderen eine bessere Abdichtung gegen eintretende Feuchtigkeit sicher gewährleistet.

Darüber hinaus kann in herkömmlicher Weise einer der U-förmigen Schenkel des Grundkörpers 2 zu einer abragenden flexiblen Dichtleiste 9 verlängert sein. Diese zusätzliche Dichtleiste kann auch an jeder anderen Stelle vom Grundkörper 2 des Profils abragen.

Insgesamt ergibt sich also ein Dichtungsprofil, das sehr leicht aufzuschieben ist und bei dem nicht mehr wie bei herkömmlichen Profilen drei verschiedene Gummiqualitäten für Grundkörper und Lippen erforderlich sind, da die Dichtlippen aus dem gleichen Material wie der Grundkörper selbst bestehen. Darüber hinaus lassen sich Dichtlippen mit verbreitertem Kopf, die einstückig mit dem Grundkörper verbunden sind, leichter herstellen als spitz zulaufende Lippen und bieten gegen das Herausziehen durch ihre Klemmwirkung einen erheblich größeren Widerstand.

## Patentansprüche

1. Auf eine Blechkante einer Fahrzeugkarosserie aufzusetzendes Dichtungsprofil (1) mit einem im Querschnitt U-förmigen Grundkörper (2) aus elastomerem Material, das mit einer darin eingebetteten, die Seitenflanken an die Blechkante anzudrückenden und im Querschnitt U-förmigen metallischen Verstärkungseinlage (3) versehen ist und deren Seitenflanken mit das Festhalten an der Blechkante fördernden, in Längsrichtung angeordneten Dichtlippen (6, 4, 5; 10–15) aus gleichem elastomerem Material wie der Grundkörper (2) versehen sind, wobei mindestens eine Dichtlippe (6; 13, 14, 15) auf einer Seitenflanke schräg nach innen einwärts gerichtet und mit einer Ecke (7) am Grundkörper (2) angelenkt ist und eine, von der Ecke (7) abgewandte verbreiterte Kopffläche aufweist, die als Anlagefläche mit der eingesetzten Blechkante in Berührung kommt, dadurch gekennzeichnet, daß die mindestens eine Dichtlippe (6; 13, 14, 15) mit dreieckigem Querschnitt ausgebildet ist, wobei die Kopffläche eine konkav gewölbte Einziehung (8) aufweist.

2. Dichtungsprofil nach Anspruch 1, dadurch gekennzeichnet, daß die verbreiterte Kopffläche (8) der dreieckförmigen Dichtlippe (6) im unbelasteten Zustand schräg im Winkel zur Mittelebene des U-förmigen Grundkörper (2) verläuft.

3. Dichtungsprofil nach Anspruch 1 und 2, dadurch gekennzeichnet, daß auf der einen Innenseite des U-förmigen Grundkörpers zwei wulstförmige Dichtlippen (4,5) und auf der anderen Innenseite eine dreieckförmige Dichtlippe (6) angeordnet sind.

4. Dichtungsprofil nach Anspruch 1 und 2, dadurch gekennzeichnet, daß auf jeder der Innenseite des U-förmigen Grundkörpers (2) mehrere Dichtlippen (10,11,12; 13,14,15) parallel zueinander verlaufen.

5. Dichtungsprofil nach einem der Ansprüche 1 bis 4, dadurch gekennzeichnet, daß einer der U-förmigen Schenkel zu einer abragenden, flexiblen Dichtleiste (9) verlängert ist.

## Claims

1. A sealing profile (1) which is to be mounted onto a sheet metal edge of a vehicle body and has a main body (2) of U-shaped cross section made from an elastomeric material provided with a metal reinforcing inlay (3) of U-shaped cross section which is embedded in the elastomeric material and which is to press the side flanks onto the sheet metal edge, and the side flanks of which are provided with sealing lips (6, 4, 5; 10–15) which are made from the same elastomer material as the main body (2) and are disposed in a longitudinal directinand promote retention on the sheet metal edge, wherein at least one sealing lip (6; 13, 14, 15) on a side flank is directed obliquely inwardly and hinged to the main body (2) by a corner (7) and has a widened top surface, remote from the corner (7), which comes into contact as a contact surface with the inserted edge of the sheet metal panel, charcterised in that the at least one sealing lip (6; 13, 14, 15) is formed with a triangular cross section, wherein the top surface has a concave recess (8).

2. A sealing profile as claimed in claim 1, characterised in that the widened top surface (8) of the triangular sealing lip (6) when in its unstressed state extends obliquely at an angle to the central plane of the U-shaped main body (2).

3. A sealing profile as claimed in claims 1 and 2, characterised in that two bead-shaped sealing lips (4, 5) are disposed on one inner side of the U-shaped main body, and a triangular sealing lip (6) is disposed on the other inner side.

4. A sealing profile as claimed in claims 1 and 2, characterised in that a plurality of sealing lips (10, 11, 12; 13, 14, 15) extend parallel to one another on each inner side of the U-shaped main body (2).

5. A sealing profile as claimed in one of the claims 1 to 4, characterised in that one of the U-shaped limbs is extended to form a downwardly projecting flexible sealing strip (9).

## Revendications

1. Profilé d'étanchéité (1) destiné à être posé sur une arête de tôle de la carrosserie d'un véhicule, comprenant un corps de base (2), de section transversale en forme de U, en une matière élastomère et muni d'un renfort métallique inséré (3), qui y est noyé, qui applique les flancs latéraux sur l'arête de la tôle à une section transversale en forme de U, les flancs latéraux du corps de base étant munis de lèvres d'étanchéité (6, 4, 5; 10 à 15), en la même matière élastomère que le corps de base (2), disposées dans la directin longitudinale et favorisant le maintien sur l'arête de la tôle, au moins l'une des lèvres d'étanchéité (6, 13, 14, 15) étant dirigée en étant inclinée vers l'intérieur sur un flanc latéral et étant articulée au corps de base (2) par un sommet (7) et comportant une surface élargie formant une tête, éloignée du sommet (7) et venant en contact, en tant que surface d'appui, avec l'arête de tôle introduite, caractérisé en ce que ladite au moins une lèvre d'étanchéité (6; 13, 14, 15) a une section transversale triangulaire, la surface formant une tête comportant un refoncement (8) concave.

2. Profilé d'étanchéité suivant la revendication 1, caractérisé en ce que la surface élargie formant une tête (8) de la lèvre d'étanchéité (6) triangulaire est, à l'état non chargé, inclinée suivant un angle par rapport au plan médian du corps de base (2) en forme de U.

3. Profilé d'étanchéité suivant la revendication 1 ou 2, caractérisé en ce que, sur l'un des côtés intérieurs du corps de base en forme de U, sont prévues deux lèvres d'étanchéité (4, 5) en forme de bourrelets et, de l'autre côté intérieur, une lèvre d'étanchéité (6) triangulaire.

4. Profilé d'étanchéité suivant la revendication 1 ou 2, caractérisé en ce que, sur chaque côté intérieur du corps de base (2) en forme de U, s'étendent parallèlement les unes aux autres plusieurs lèvres d'étanchéité (10, 11, 12; 13, 14, 15).

5. Profilé d'étanchéité suivant l'une des revendications 1 à 4, caractérisé en ce que l'une des branches en forme de U est prolongée en une réglette d'étanchéité (9) souple et en saillante.

FIG.1

FIG.2